# EUROPÄISCHE PATENTSCHRIFT

(11) **EP 2 806 160 B1**
(45) Veröffentlichungstag und Bekanntmachung des Hinweises auf die Patenterteilung: **05.07.2017**
(21) Anmeldenummer: 13002688.3
(22) Anmeldetag: 23.05.2013
(51) Int. Cl.: F03D 80/00

(54) **Windenergieanlagenrotorblatt mit einer elektrischen Heizeinrichtung und mehreren Blitzschutzleitern**
Wind turbine rotor blade with an electric heating device and multiple lightning conductors
Pale de rotor d'éolienne avec un dispositif de chauffage électrique et plusieurs paratonnerres

(43) Veröffentlichungstag der Anmeldung: 26.11.2014
(73) Patentinhaber: Nordex Energy GmbH, 22419 Hamburg (DE)
(72) Erfinder: Hendrik, Klein, 18147 Rostock (DE); Ohlerich, Nick, 18055 Rostock (DE)
(74) Vertreter: Hauck Patentanwaltspartnerschaft mbB

(56) Entgegenhaltungen:
- EP-B1- 1 187 988
- WO-A1-2011/127997
- DE-A1-102008 006 427
- DE-C1- 19 748 716
- US-A1- 2010 119 370

## Beschreibung

Die Erfindung betrifft ein Windenergieanlagenrotorblatt mit einer Rotorblattwurzel, einer Rotorblattspitze, einer elektrischen Heizeinrichtung, einem Blitzrezeptor im Bereich der Rotorblattspitze und mehreren, von dem Blitzrezeptor zur Rotorblattwurzel führenden Blitzschutzleitern.

Wegen ihrer großen Bauhöhe sind Windenergieanlagen häufig von einem Blitzschlag betroffen. Am häufigsten schlägt der Blitz im Bereich der Rotorblattspitze ein, wenn das Rotorblatt schräg oder gerade nach oben weist. Um eine Zerstörung des Rotorblatts durch den Blitzschlag zu verhindern, ist es seit langem bekannt, einen Blitzschutzrezeptor im Bereich der Rotorblattspitze anzuordnen und mit einem Blitzschutzleiter zu verbinden. Der Strom eines in den Blitzschutzrezeptor einschlagenden Blitzes wird dann über den Blitzschutzleiter zur Rotorblattwurzel, von dort in die Nabe, über die Gondel und den Turm zur Erde abgeleitet. Als Blitzschutzleiter werden in erster Linie Kupferkabel mit relativ großem Querschnitt innerhalb des Rotorblatts angeordnet, insbesondere entlang eines Holms oder Stegs des Rotorblatts.

Um einer Vereisung der Rotorblätter entgegenzuwirken, werden elektrische Heizeinrichtungen eingesetzt. Diese bestehen aus einem elektrisch leitfähigen Material und werden im Betrieb von einem Heizstrom durchflossen, der zu einer Erwärmung der Heizeinrichtung führt. Derartige Heizeinrichtungen sind zusätzliche, elektrisch leitfähige Strukturen im oder am Rotorblatt, die typischerweise über eine große Länge mehr oder weniger parallel zu dem Blitzschutzleiter angeordnet sind. Bei einem Blitzschlag werden über den Blitzschutzleiter elektrische Ströme mit sehr großen und schnell ansteigenden Stromstärken abgeleitet, was aufgrund des Maxwell'schen Durchflutungsgesetzes ein stark veränderliches Magnetfeld in der Umgebung des Blitzschutzleiters erzeugt. Aufgrund des Maxwell'schen Induktionsgesetzes können in der Folge hohe Spannungen in die elektrische Heizeinrichtung induziert werden, was zu Potentialdifferenzen zwischen dem Blitzschutzleiter und der Heizeinrichtung bzw. zwischen dem Blitzschutzleiter und den mit der Heizeinrichtung verbundenen Stromleitern führt. Abhängig vom Stromgradienten und den geometrischen Verhältnissen im Rotorblatt können diese Potentialdifferenzen mehrere Megavolt betragen, sodass es zu Überschlägen zwischen dem Blitzschutzleiter und der elektrischen Heizeinrichtung bzw. den Stromleitern kommt. Dabei kann es zu einer Beschädigung der Heizeinrichtung oder benachbarter Strukturen des Rotorblatts kommen, bis hin zu einem Totalschaden.

Aus der Druckschrift WO 2006/051147 A1 ist ein Windenergieanlagenrotorblatt mit einer Tragstruktur aus Kohlenstofffasern bekannt geworden, das keine elektrische Heizeinrichtung aufweist. Ein Blitzschutzleiter ist über mehrere Kabel mit Metallplatten an der Tragstruktur verbunden, um einen Potentialausgleich zwischen dem Blitzschutzleiter und der elektrisch leitfähigen Tragstruktur herbeizuführen.

Aus der Druckschrift WO 2011/148049 A1 ist ein Windenergieanlagenrotorblatt mit einer kastenförmigen Tragstruktur und daran angefügten Profilnasenkanten und Profilendkanten bekannt geworden. Im Bereich der Profilnasenkanten gibt es eine elektrische Heizeinrichtung, die mehrere Heizdrähte aufweist. Außerdem gibt es mehrere Blitzschutzleiter, die über die kastenförmige Tragstruktur und die Profilnasenkanten verteilt angeordnet sind.

Aus der Druckschrift EP 1 187 988 B1 ist ein Windenergieanlagenrotorblatt mit einem zentralen, etwa mittig in dem Rotorblatt angeordneten Blitzschutzleiter bekannt geworden. Ein im Bereich der Rotorblattspitze angeordneter Blitzrezeptor ist mit diesem zentralen Blitzschutzleiter verbunden. Im Bereich der Profilnasenkante gibt es eine elektrische Heizeinrichtung mit mehreren elektrischen Heizelementen. Diese sind mit zwei in Längsrichtung des Rotorblatts verlaufenden, elektrischen Anschlussleitungen verbunden, sodass sie mit einem Heizstrom versorgt werden können. Die rotorblattspitzenseitigen Enden der elektrischen Anschlussleitungen für die Heizelemente sind über Funkenstrecken mit dem Blitzrezeptor verbunden. Dadurch soll ein Teil des Blitzstroms durch die elektrischen Anschlussleitungen der Heizelemente abgeführt werden, so dass diese zugleich als Blitzschutzleiter wirken. Die Potentialdifferenz zwischen den beiden Anschlussleitungen soll stets Null bzw. so gering sein, dass die Heizelemente nicht durch den Blitzschlag beschädigt werden können. Ein weiteres Beispiel ist aus EP 1 187 988 B1 bekannt.

Davon ausgehend ist es die Aufgabe der Erfindung, ein Windenergieanlagenrotorblatt mit einer elektrischen Heizeinrichtung und einem Blitzschutzleiter zur Verfügung zu stellen, das einen verbesserten Blitzschutz aufweist.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat eine Rotorblattwurzel, eine Rotorblattspitze, eine elektrische Heizeinrichtung, einen Blitzrezeptor im Bereich der Rotorblattspitze und mehrere, von dem Blitzrezeptor zur Rotorblattwurzel führende Blitzschutzleiter. Es zeichnet sich dadurch aus, dass
- genau zwei der Blitzschutzleiter vorhanden sind,
- mindestens ein weiterer Blitzrezeptor vorhanden ist, der in einem Abstand von der Rotorblattspitze angeordnet und mit einem der Blitzschutzleiter verbunden ist, und
- jeder der beiden Blitzschutzleiter an einer Vielzahl von Punkten zwischen der Rotorblattwurzel und der Rotorblattspitze elektrisch 1 eitend mit der elektrischen Heizeinrichtung verbunden ist, so dass im Falle eines Blitzschlags ein Potentialausgleich zwischen den beiden Blitzschutzleitern über die elektrische Heizeinrichtung erfolgt.

Das Windenergieanlagenrotorblatt kann für eine Windenergieanlage mit einem Rotor mit horizontaler Achse bestimmt sein. Es kann aus einem faserverstärkten Kunststoffmaterial gefertigt sein, beispielsweise in einem Vakuuminfusionsverfahren. Es kann aus zwei vorgefertigten Rotorblatthalbschalen zusammengefügt sein, insbesondere aus einer druckseitigen Rotorblatthalbschale und einer saugseitigen Rotorblatthalbschale. Das Windenergieanlagenrotorblatt kann eine Tragstruktur mit einem oder mehreren Gurten und einem oder mehreren, zwischen zwei Halbschalen bzw. zwei Gurten angeordneten Stegen aufweisen. Alternativ kann das Rotorblatt als zentrale Tragstruktur einen Holm aufweisen, beispielsweise in Kastenbauweise. Die genannten Tragstrukturelemente, insbesondere die Gurte, können mit den Rotorblatthalbschalen verbunden werden, bevor diese zu einem Rotorblatt zusammengefügt werden. Hierzu können sie separat vorgefertigt und beim Herstellen der Halbschalen in diese integriert werden. Alternativ können sie, beispielsweise durch Einlegen von Verstärkungsfasern in die Halbschalenformen, gemeinsam mit den übrigen Bestandteilen der Halbschalen hergestellt werden.

An der Rotorblattwurzel des Windenergieanlagenrotorblatts kann ein Blattanschlussbereich zur Verbindung mit einer Rotornabe ausgebildet sein, beispielsweise ein Befestigungsflansch. Das Windenergieanlagenrotorblatt weist im Querschnitt ein aerodynamisches Profil mit einer Profilnasenkante und einer Profilendkante auf. Das Windenergieanlagenrotorblatt kann eine Länge von beispielsweise 30 m oder mehr, insbesondere von 50 m oder mehr, aufweisen.

Um einer Vereisung vorzubeugen oder einer bestehenden Vereisung entgegenzuwirken, weist das Windenergieanlagenrotorblatt eine elektrische Heizeinrichtung auf. Diese kann sich über einen Teil oder über die gesamte Länge des Windenergieanlagenrotorblatts erstrecken. Die elektrische Heizeinrichtung ist dazu ausgebildet, von einem elektrischen Strom durchflossen und dadurch erwärmt zu werden. Sie kann im Bereich der Profilnasenkante des Windenergieanlagenrotorblatts angeordnet sein. Insbesondere kann sich die elektrische Heizeinrichtung ungefähr von der Profilnasenkante bis zu einer Profildickenrücklage erstrecken, sowohl auf der Druckseite als auch auf der Saugseite des Windenergieanlagenrotorblatts. Die elektrische Heizeinrichtung kann dazu ausgebildet sein, den genannten Oberflächenbereich des Windenergieanlagenrotorblatts mehr oder weniger gleichmäßig zu erwärmen. Die elektrische Heizeinrichtung kann an einer aerodynamischen Oberfläche des Windenergieanlagenrotorblatts angeordnet sein.

Im Bereich der Rotorblattspitze weist das Windenergieanlagenrotorblatt einen Blitzrezeptor auf. Dabei kann es sich insbesondere um einen metallischen Körper handeln, der einen Teil der Oberfläche des Windenergieanlagenrotorblatts bildet oder eng benachbart zu dieser Oberfläche angeordnet ist, beispielsweise nur durch eine Lackschicht von der Oberfläche getrennt. Der Blitzrezeptor im Bereich der Rotorblattspitze kann auch von der Rotorblattspitze selbst gebildet sein, die in diesem Fall vorzugsweise aus Metall besteht. Alternativ können auf der Saug- und/oder Druckseite des Rotorblatts im Bereich der Rotorblattspitze Blitzschutzrezeptoren angeordnet sein. Ein solcher, die Rotorblattspitze selbst nicht einschließender Blitzrezeptor befindet sich ebenfalls im Bereich der Rotorblattspitze und kann bis unmittelbar an die Rotorblattspitze heranreichen oder einen geringen Abstand von der Rotorblattspitze aufweisen, beispielsweise einen Abstand im Bereich von 1 cm bis 25 cm, insbesondere im Bereich von 5 cm bis 20 cm oder im Bereich 10 cm bis 15 cm. Mit dem Begriff "Abstand" ist jetzt und im Folgenden die Distanz zwischen der Rotorblattspitze und demjenigen Punkt des Blitzrezeptors gemeint, der die geringste Entfernung von der Rotorblattspitze aufweist. Allgemein kann ein Blitzschutzrezeptor dann als im Bereich der Rotorblattspitze angeordnet angesehen werden, wenn sein Abstand von der Rotorblattspitze weniger als 25 cm, insbesondere weniger als 15 cm, beträgt.

Mehrere Blitzschutzleiter führen vom Blitzrezeptor zur Rotorblattwurzel. Diese können auf ihrer gesamten Länge zwischen Blitzrezeptor und Rotorblattwurzel in einem Abstand voneinander angeordnet sein. Im Bereich der Rotorblattwurzel können die Blitzschutzleiter einen oder mehrere Erdungsanschlüsse aufweisen, über die eine Verbindung zu weiteren Blitzschutzleitern in einer Rotornabe, einer Gondel und/oder einem Turm einer Windenergieanlage hergestellt werden kann. Auf diese Weise kann der Blitzstrom eines einschlagenden Blitzes über die Blitzschutzleiter zur Erde abgeleitet werden. Die Blitzschutzleiter sind so dimensioniert, dass sie die bei einem Blitzschlag auftretenden Stromstärken von beispielsweise 50 kA oder mehr zerstörungsfrei ableiten können. Dabei kann sich der Blitzstrom im Rotorblatt auf mehrere Leiter aufteilen oder aber auch im Wesentlichen von nur einem der Blitzschutzleiter abgeleitet werden. Bei einer Ableitung des Blitzstroms über mehrere Leiter kann der Blitzstrom an den Blitzrezeptoren und/oder im Bereich der Blattwurzel auf einen Blitzableiter zusammengeführt werden.

Bei der Erfindung sind genau zwei der Blitzschutzleiter vorhanden. Jeder dieser beiden Blitzschutzleiter ist dafür ausgelegt, gegebenenfalls auch allein den Strom eines einschlagenden Blitzes abzuleiten, ohne hierdurch beschädigt zu werden.

Mindestens ein weiterer Blitzrezeptor ist in einem Abstand von der Rotorblattspitze angeordnet und mit einem der Blitzschutzleiter verbunden. Der mindestens eine weitere Blitzrezeptor befindet sich außerhalb Bereichs der Rotorblattspitze. Sein Abstand von der Rotorblattspitze kann beispielsweise 30 cm oder mehr, zum Beispiel ungefähr 50 cm oder mehr betragen. Über diesen mindestens einen weiteren Blitzrezeptor können Blitze abgeleitet werden, die in einem Abstand von der Rotorblattspitze einschlagen. Durch die Verwendung eines gesonderten Blitzrezeptors kann eine Beschädigung des Rotorblatts in diesem Bereich vermieden werden. Ein in den weiteren Blitzrezeptor einschlagender Blitz wird im Wesentlichen über den mit dem weiteren Blitzrezeptor verbundenen Blitzschutzleiter abgeleitet. Es versteht sich, dass ein Teil des Blitzstroms auch über den anderen Blitzschutzleiter abgeleitet werden kann.

Jeder der beiden Blitzschutzleiter ist an einer Vielzahl von Punkten zwischen der Rotorblattwurzel und der Rotorblattspitze elektr isch leitend mit der elektrischen Heizeinrichtung verbunden. Im Falle eines Blitzschlags kann ein Potentialausgleich zwischen den beiden Blitzschutzleitern über die elektrische Heizeinrichtung erfolgen.

Die Erfindung beruht auf der Erkenntnis, dass insbesondere bei großen Rotorblättern, die mehrere elektrisch leitfähige Strukturen aufweisen, ein Potentialausgleich zwischen diesen Strukturen notwendig ist, um eine Beschädigung durch Spannungen und Ströme, die in den betreffenden Bauteilen durch einen in wenigen µs sprunghaft ansteigenden Blitzstrom induziert werden, zu vermeiden. Insbesondere haben die Erfinder erkannt, dass es für den notwendigen Potentialausgleich nicht nur auf eine hohe elektrische Leitfähigkeit des verwendeten Potentialausgleichselements ankommt. Wird der Potentialausgleich nämlich an einer Vielzahl von Punkten in mehr oder weniger geringem Abstand voneinander herbeigeführt, trägt die Vielzahl der Verbindungen zwischen den beiden Blitzschutzleitern wesentlich dazu bei, dass die über ein einzelnes Potentialausgleichselement auftretenden Potentialdifferenzen begrenzt werden. Die Erfinder haben festgestellt, dass ein solcher, an einer Vielzahl von benachbarten Punkten herbeigeführter Potentialausgleich nicht nur durch Kabel oder andere, entsprechend niederohmige Leiter erfolgen kann, sondern auch über elektrische Heizeinrichtungen, die wegen der vorgesehenen Erwärmung vergleichsweise hochohmig sind. Überraschend wurde festgestellt, dass auch die Strombelastbarkeit elektrischer Heizeinrichtungen kurzzeitig den bei einem Blitzschlag auftretenden Strombelastungen gewachsen ist. Hierzu trägt insbesondere die hohe Temperaturbeständigkeit derartiger Heizeinrichtungen bei.

Ein besonderer Vorteil der Erfindung ist, dass durch den über die elektrische Heizeinrichtung herbeigeführten Potentialausgleich mit zusätzlichen Blitzrezeptoren in einem Abstand von der Rotorblattspitze gearbeitet werden kann. Schlägt ein Blitz in einen solchen Blitzrezeptor ein, ergibt sich im Gegensatz zu einem Blitzeinschlag in einen an der Rotorblattspitze befindlichen Blitzrezeptor zwangsläufig eine asymmetrische Stromaufteilung auf die beiden Blitzschutzleiter. Ohne einen Potentialausgleich zwischen den beiden Blitzschutzleitern kann dies zu einer Beschädigung des Windenergieanlagenrotorblatts infolge induzierter Spannungen und Ströme führen. Durch den Potentialausgleich über die elektrische Heizeinrichtung wird eine solche Beschädigung zuverlässig verhindert.

In einer Ausgestaltung steht jeder der Blitzschutzleiter entlang der gesamten Länge der elektrischen Heizeinrichtung im elektrischen Kontakt mit der elektrischen Heizeinrichtung. Insbesondere können Randabschnitte oder Kanten der elektrischen Heizeinrichtung so mit den benachbart angeordneten Blitzschutzleitern verbunden sein, dass ein in einer Längsrichtung der Blitzschutzleiter kontinuierlicher elektrischer Kontakt hergestellt wird. Ebenfalls einbezogen ist eine Kontaktierung zwischen elektrischer Heizeinrichtung und den benachbart angeordneten Blitzschutzleitern in geringen Abständen von beispielsweise 10 cm oder weniger, insbesondere von 1 cm oder weniger, was einer quasi-kontinuierlichen elektrischen Kontaktierung über die Länge der elektrischen Heizeinrichtung entspricht. In jedem Fall wird ein besonders wirksamer Potentialausgleich zwischen den beiden Blitzschutzleitern erzielt.

In einer Ausgestaltung kann die elektrische Heizeinrichtung über die beiden Blitzschutzleiter mit einem Heizstrom versorgt werden. Dies bedeutet, dass die Verbindung zwischen der Heizeinrichtung und den Blitzschutzleitern in hierfür geeigneter Weise ausgestaltet ist und dass die Blitzschutzleiter an eine Heizstromversorgungseinrichtung angeschlossen, hierfür vorbereitet oder geeignet sind. Ein Vorteil dieser Ausgestaltung besteht in dem besonders einfachen Aufbau, bei dem die beiden Blitzschutzleiter zugleich zur Ableitung von Blitzströmen als auch zur Stromversorgung der elektrischen Heizeinrichtung verwendet werden.

In einer Ausgestaltung ist die elektrische Heizeinrichtung so ausgebildet, dass ein ihr über die beiden Blitzschutzleiter zugeführter Heizstrom quer zu einer Längsrichtung des Rotorblatts durch die elektrische Heizeinrichtung fließt. Hierzu kann die elektrische Heizeinrichtung beispielsweise ein flächiges, folienartiges Material, oder auch eine Vielzahl von flächig angeordneten, elektrisch leitfähigen Drähten oder Fasern aufweisen. Die elektrische Leitfähigkeit der Heizeinrichtung in der genannten Richtung ist für einen wirksamen Potentialausgleich besonders vorteilhaft.

In einer Ausgestaltung weist einer der Blitzschutzleiter einen über die gesamte Länge der elektrischen Heizeinrichtung verlaufenden, metallischen Leiter auf. Bei dem metallischen Leiter kann es sich beispielsweise um ein massives Metallprofil, ein Kabel mit einem einzigen Leiter oder einer Vielzahl von Leitern wie Drähten oder Litzen und mit flachem, eckigem oder rundem Querschnitt handeln. Der metallische Leiter kann insbesondere aus Kupfer bestehen. Ebenfalls möglich ist die Verwendung von Aluminium oder anderen Metallen, die eine ausreichende Leitfähigkeit aufweisen. Der metallische Leiter kann einen Querschnitt von beispielsweise 25 mm² oder mehr aufweisen, insbesondere von etwa 50 mm² oder mehr im Falle der Verwendung von Kupfer. Der Blitzschutzleiter kann ausschließlich aus einem solchen metallischen Leiter bestehen, aber auch mit weiteren, elektrisch leitfähigen Elementen zu dem Blitzschutzleiter kombiniert sein.

In einer Ausgestaltung weist das Rotorblatt einen elektrisch leitfähigen Hauptgurt auf, der sich über die gesamte Länge der elektrischen Heizeinrichtung erstreckt, und der Blitzschutzleiter oder ein Teil davon wird von dem elektrisch leitfähigen Hauptgurt gebildet. Der elektrisch leitfähige Hauptgurt kann insbesondere ein Kohlenstofffasermaterial aufweisen. Er bildet ein die wesentlichen mechanischen Belastungen des Windenergieanlagenrotorblatts aufnehmenden Teil einer Tragstruktur. Der Blitzschutzleiter kann über seine gesamte Länge oder über die gesamte Länge der elektrischen Heizeinrichtung ausschließlich von dem Hauptgurt gebildet sein. Alternativ kann er mit weiteren, elektrisch leitfähigen Materialien zu dem Blitzschutzleiter kombiniert sein. Die Verwendung eines elektrisch leitfähigen Hauptgurts als Blitzschutzleiter oder dessen Einbeziehung in den Blitzschutzleiter ist vorteilhaft, weil ein gesonderter Potentialausgleich zwischen Blitzschutzleiter und Hauptgurt in diesem Fall nicht benötigt wird. Zusätzliche Probleme durch Induktion von Spannungen oder Strömen in den Hauptgurt bei Ableitung eines Blitzstroms durch einen zu dem Hauptgurt benachbart angeordneten Blitzschutzleiter werden von vornherein ausgeschlossen. Gleichzeitig kann auf zusätzliche Blitzschutzleiter oder elektrische Anschlussleitungen für die Heizeinrichtung verzichtet werden.

In einer Ausgestaltung weist der Hauptgurt eine Außenseite auf, die einer aerodynamischen Oberfläche des Windenergieanlagenrotorblatts zugewandt ist, wobei ein erster, streifenförmig in einer Längsrichtung des Rotorblatts erstreckter Abschnitt der Außenseite im elektrischen Kontakt mit der elektrischen Heizeinrichtung steht und ein zweiter Abschnitt der Außenseite durch eine elektrisch isolierende Materiallage von der elektrischen Heizeinrichtung getrennt ist. Insbesondere kann ein unmittelbarer elektrischer Kontakt zwischen dem ersten Abschnitt der Außenseite und der elektrischen Heizeinrichtung bestehen. Die elektrisch isolierende Materiallage kann beispielsweise eine einzelne Lage oder mehrere Lagen eines glasfaserverstärkten Kunststoffmaterials aufweisen, aus dem Teile der Rotorblatthalbschale, die mit dem Hauptgurt kombiniert ist, bestehen. Der zweite Abschnitt der Außenseite des Hauptgurts kann ebenfalls streifenförmig sein und in Längsrichtung des Rotorblatts verlaufen. Durch die genannte Art der Kontaktierung wird erreicht, dass die Stromversorgung der elektrischen Heizeinrichtung über den Hauptgurt gezielt im Bereich des ersten Abschnitts der Außenseite des Hauptgurts erfolgt. Dadurch kann die Heizeinrichtung im Bereich des zweiten Abschnitts der Außenseite bereits die gewünschte Heizwirkung entfalten.

In einer Ausgestaltung wird der Blitzschutzleiter im Bereich der elektrischen Heizeinrichtung von dem Hauptgurt und einem benachbart angeordneten, metallischen Leiter gebildet. Beide Elemente stehen im elektrischen Kontakt miteinander und bilden gemeinsam einen der beiden Blitzschutzleiter. Es versteht sich, dass auch beide Blitzschutzleiter auf diese Weise ausgestaltet sein können - dies gilt auch für die zuvor und nachstehend erläuterten Ausgestaltungen. Der zusätzliche metallische Leiter kann die Stromtragfähigkeit des kombinierten Blitzschutzleiters erhöhen. Außerdem kann er die elektrische Kontaktierung der Heizeinrichtung, die über den metallischen Leiter erfolgen kann, vereinfachen. Insbesondere kann sich der metallische Leiter über die gesamte Länge der elektrischen Heizeinrichtung und/oder des Hauptgurts erstrecken. Endet der Hauptgurt in einem Abstand von der Rotorblattspitze, kann sich der metallische Leiter über das Ende des Hauptgurts hinaus bis zum Blitzrezeptor im Bereich der Rotorblattspitze erstrecken.

In einer Ausgestaltung ist zwischen dem Hauptgurt und dem benachbart angeordneten, metallischen Leiter ein Metallgitter angeordnet. Das Metallgitter kann beispielsweise ein Drahtgeflecht, -gelege oder -gewebe aus Kupferdrähten oder Kupferlitzen sein. Es begünstigt eine großflächige elektrische Kontaktierung des Hauptgurts und vermeidet dadurch Beschädigungen infolge einer ungleichmäßigen Ableitung des Blitzstroms.

In einer Ausgestaltung weist die elektrische Heizeinrichtung ein Kohlenstofffasermaterial auf. Grundsätzlich kann die elektrische Heizeinrichtung auch aus einem metallischen Material, insbesondere aus Widerstandsdrähten, oder einer Folie mit einem definierten elektrischen Widerstand bestehen. Die Verwendung eines Kohlenstofffasermaterials zeichnet sich durch eine besonders einfache Integration in die Struktur und die Fertigungsprozesse des Windenergieanlagenrotorblatts aus.

In einer Ausgestaltung weist eine Verbindung zwischen einem der Blitzschutzleiter und dem Blitzrezeptor im Bereich der Rotorblattspitze und/oder dem mindestens einen weiteren Blitzrezeptor und/oder einem Erdungsanschluss im Bereich der Rotorblattwurzel eine Funkenstrecke und/oder eine Vakuumschaltröhre auf. Eine entsprechende Verbindung zwischen dem jeweils anderen Blitzschutzleiter und den übrigen, genannten Elementen kann auf dieselbe Weise ausgebildet sein. Andere als Überspannungsableiter einsetzbare Bauelemente können ebenfalls für die Verbindung verwendet werden. Die Funkenstrecke und/oder die Vakuumschaltröhre oder ein sonstiger, entsprechender Überspannungsableiter sorgen für eine elektrische Isolierung zwischen den genannten Elementen unterhalb einer vorgegebenen Potentialdifferenz. Dadurch können die Blitzschutzleiter ohne weiteres zur Stromversorgung der elektrischen Heizeinrichtung mit Betriebsspannungen im Bereich von beispielsweise 400 V oder mehr, insbesondere bis zu 1000 V, eingesetzt werden. Bei höheren Spannungen, etwa von mehreren Megavolt wie im Falle eines Blitzschlags, kommt es zu Überschlägen und der Blitzstrom kann über die Funkenstrecke und/oder die Vakuumschaltröhre oder den sonstigen Überspannungsableiter abgeleitet werden.

Die Verbindung zwischen einem der Blitzschutzleiter und dem Blitzrezeptor im Bereich der Rotorblattspitze und/oder dem mindestens einen weiteren Blitzrezeptor kann auch als segmentierter Ableitstreifen (diverter strip) ausgebildet sein. Ein segmentierter Ableitstreifen kann eine Vielzahl von in Abständen voneinander angeordneten Leitern aufweisen, beispielsweise Blöcke oder Bleche aus einem Metall wie Kupfer oder Aluminium, insbesondere angeordnet auf einem elektrisch isolierenden Trägermaterial wie einem Klebestreifen. Die Ableitstreifen können auf der Oberfläche des Rotorblatts angeordnet und stoffschlüssig mit dieser verbunden sein. Dies ermöglicht eine leichte Montage und Zugänglichkeit der Überspannungsableiter, ohne große Änderungen in der Kontur des Rotorblatts hervorzurufen. Insbesondere ist es möglich, mit dem segmentierten Ableitstreifen einen Abstand zwischen einem Blitzschutzleiter und einem Blitzrezeptor zu überbrücken, insbesondere einen Abstand zwischen einem blattspitzenseitigen Ende eines Blitzschutzleiters im Bereich eines blattspitzenseitigen Endes der Heizeinrichtung und dem Blitzrezeptor im Bereich der Rotorblattspitze.

In einer Ausgestaltung ist einer der beiden Blitzschutzleiter an einer Druckseite, der andere der beiden Blitzschutzleiter an einer Saugseite des Rotorblatts angeordnet. Die auf beiden Seiten des Windenergieanlagenrotorblatts angeordneten Blitzrezeptoren sind mit jeweils einem Blitzschutzleiter verbunden, so dass eine Beschädigung im Falle eines Blitzschlags durch einen auf der von einem Blitzrezeptor entfernten Seite vermieden werden kann.

In einer Ausgestaltung sind alle vorhandenen Blitzrezeptoren in einem Abstand von 20 % oder weniger der Länge des Rotorblatts von der Rotorblattspitze entfernt angeordnet. Insbesondere können alle Blitzrezeptoren in einem Abstand von 15 % oder weniger oder sogar nur 10 % oder weniger der Länge von der Rotorblattspitze entfernt angeordnet sein. Erfahrungsgemäß ist ein Blitzschlag in diesen rotorblattspitzennahen Bereichen des Rotorblatts besonders häufig und eine Ausstattung des Rotorblatts dort mit zusätzlichen Blitzrezeptoren besonders wichtig.

Nachfolgend wird die Erfindung anhand mehrerer in Figuren dargestellter Ausführungsbeispiele näher erläutert. Es zeigen:
- Fig. 1: ein erfindungsgemäßes Rotorblatt in einer vereinfachten, perspektivischen Ansicht,
- Fig. 2: einen Querschnitt durch das Rotorblatt aus Fig. 1 an der mit A-A bezeichneten Stelle in einer vereinfachten, schematischen Darstellung,
- Fig. 3: einen Querschnitt durch ein anderes Windenergieanlagenrotorblatt mit zwei elektrisch leitfähigen Hauptgurten in einer vereinfachten, schematischen Darstellung,
- Fig. 4: einen Querschnitt durch ein anderes Windenergieanlagenrotorblatt mit zwei Blitzschutzleitern, die jeweils einen metallischen Leiter und einen elektrisch leitfähigen Hauptgurt aufweisen, in einer vereinfachten, schematischen Darstellung,
- Fig. 5: einen Querschnitt durch ein weiteres Windenergieanlagenrotorblatt, bei dem zwischen Hauptgurt und metallischem Leiter ein Metallgitter angeordnet ist, ebenfalls in einer vereinfachten, schematischen Darstellung.

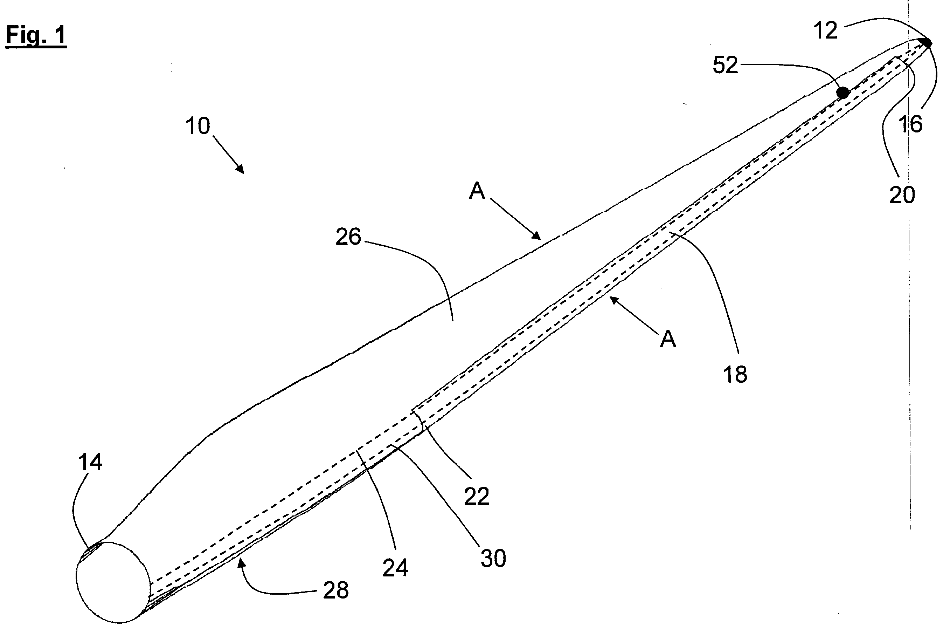

Das in der Fig. 1 gezeigte Windenergieanlagenrotorblatt 10 weist eine Rotorblattspitze 12 und eine Rotorblattwurzel 14 auf. Im Bereich der Rotorblattspitze 12 ist ein Blitzschutzrezeptor 16 angeordnet, der die Rotorblattspitze 12 bildet. Das Rotorblatt 10 weist eine dem Betrachter zugewandte Druckseite 26 und eine vom Betrachter abgewandte Saugseite 28 auf.

Im Bereich der Profilnasenkante des Rotorblatts 10 ist eine elektrische Heizeinrichtung 18 angeordnet. Sie weist ein rotorblattspitzenseitiges Ende 20 und ein rotorblattwurzelseitiges Ende 22 auf und erstreckt sich über einen Großteil der Länge des Rotorblatts 10, bis nahe an die Rotorblattspitze 12 heran.

Die Fig. 1 zeigt außerdem einen ersten Blitzschutzleiter 24, der einen metallischen Leiter aufweist. Er erstreckt sich von der Rotorblattwurzel 14 bis zur Rotorblattspitze 12 und ist dort mit dem Blitzschutzrezeptor 16 verbunden. Wie die Figur zeigt, verläuft der erste Blitzschutzleiter 24 im Wesentlichen benachbart zu einem auf der Druckseite 26 angeordneten Rand der elektrischen Heizeinrichtung 18. Dort ist er an einer Vielzahl von Punkten mit der elektrischen Heizeinrichtung 18 leitend verbunden.

Ein zweiter Blitzschutzleiter 30 erstreckt sich ebenfalls von der Rotorblattwurzel 14 bis zur Rotorblattspitze 12 und ist dort mit dem Blitzrezeptor 16 verbunden. Er verläuft auf der Saugseite 28 des Windenergieanlagenrotorblatts 10 und ist im Bereich der elektrischen Heizeinrichtung 18 benachbart zu einem auf der Saugseite 28 angeordneten Rand der elektrischen Heizeinrichtung 18 angeordnet und dort an einer Vielzahl von Punkten mit der elektrischen Heizeinrichtung 18 leitend verbunden.

An der Druckseite 26 in einem Abstand von etwa 10 % der Gesamtlänge des Rotorblatts von der Rotorblattspitze 12 befindet sich ein weiterer Blitzrezeptor 52. Dieser ist elektrisch leitend mit dem ersten Blitzschutzleiter 24 verbunden. Auf der Saugseite 28 befindet sich an der gleichen Position ebenfalls ein Blitzrezeptor, der mit dem zweiten Blitzschutzleiter verbunden ist (nicht dargestellt).

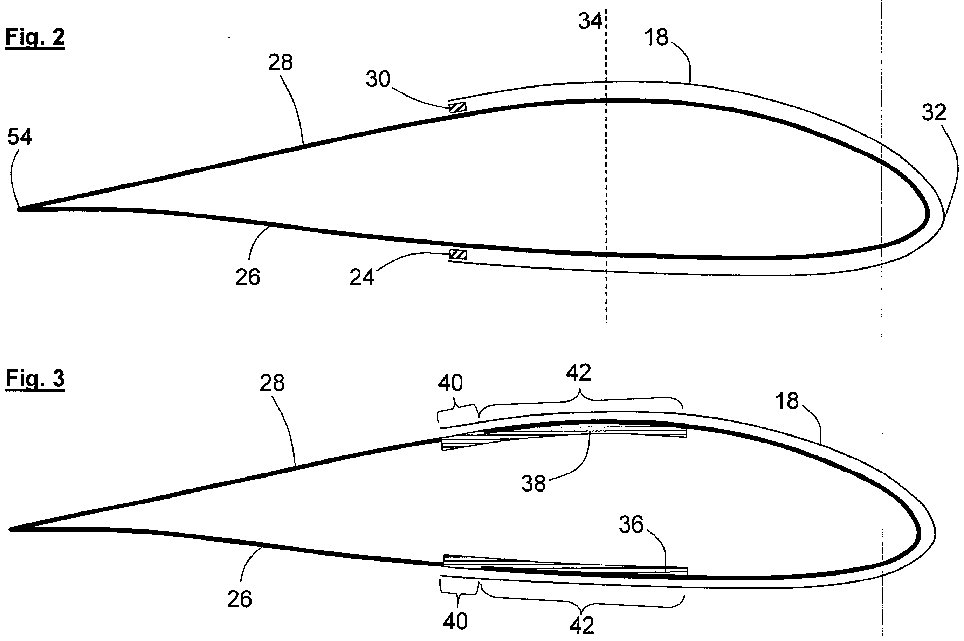

Weitere Einzelheiten sind aus den Querschnittsdarstellungen der Figuren 2 bis 5 ersichtlich. Figur 2 zeigt Druckseite 26 und Saugseite 28 des Windenergieanlagenrotorblatts 10 aus Figur 1 im Querschnitt. Man erkennt die Profilendkante 54 und die Profilnasenkante 32. Die Position der Profildickenrücklage 34, also der größten Profildicke, ist durch eine gestrichelte Linie 34 angedeutet. Die elektrische Heizeinrichtung 18 erstreckt sich vom ersten Blitzschutzleiter 24 auf der Druckseite 26 nach vorn um die Profilnasenkante 32 herum und von dort auf der Saugseite 28 zurück bis zum zweiten Blitzschutzleiter 30.

Die im Bereich des ersten Blitzschutzleiters 24 und des zweiten Blitzschutzleiters 30 angeordneten Randbereiche der elektrischen Heizeinrichtung 18 sind jeweils mit einem der beiden Blitzschutzleiter verbunden. Sie werden über diese Blitzschutzleiter 24, 30 mit einem elektrischen Heizstrom versorgt. Gleichzeitig führt die elektrische Heizeinrichtung 18 wegen der genannten elektrischen Verbindung zu den beiden Blitzschutzleitern 24, 30 im Falle eines Blitzschlags einen Potentialausgleich herbei. Die elektrische Heizeinrichtung 18 ist nicht nur in der genannten Querschnittsposition, sondern kontinuierlich über die gesamte Länge der elektrischen Heizeinrichtung 18 mit den beiden Blitzschutzleitern 24, 30 verbunden.

Die beiden Blitzschutzleiter 24, 30 bestehen aus Kupferleitern mit einer GesamtQuerschnittsfläche von mindestens 50 mm².

Im Ausführungsbeispiel der Figur 3 weist das Rotorblatt zwei elektrisch leitfähige Hauptgurte 36, 38 auf, die im Wesentlichen aus einem kohlenstofffaserverstärkten Kunststoffmaterial bestehen. An der Druckseite 26 ist ein erster Hauptgurt 36, an der Saugseite 28 ein zweiter Hauptgurt 38 angeordnet. Die übrigen, durch eine stärkere durchgezogene Linie veranschaulichten Elemente der zu dem Rotorblatt zusammengefügten Halbschalen bestehen im Wesentlichen aus einem glasfaserverstärkten Kunststoffmaterial, das elektrisch isolierend ist. Die elektrische Heizeinrichtung 18 erstreckt sich über denselben Bereich des Querschnitts wie anhand der Figur 2 erläutert. Im Unterschied zur Figur 2 gibt es jedoch keine metallischen Leiter, die die beiden Blitzschutzleiter bilden. Stattdessen bildet der druckseitige Hauptgurt 36 den ersten Blitzschutzleiter 24 und der saugseitige Hauptgurt 38 den zweiten Blitzschutzleiter 30.

Jeder der beiden Hauptgurte 36, 38 weist eine Außenseite auf, die einer aerodynamischen Oberfläche des Windenergieanlagenrotorblatts zugewandt ist. Jeweils ein erster Abschnitt 40 dieser Außenseite steht im elektrischen Kontakt mit einem Randabschnitt der elektrischen Heizeinrichtung 18 und jeweils ein zweiter Abschnitt 42 dieser Außenseite ist durch das glasfaserverstärkte Kunststoffmaterial der Rotorblatthalbschale von der elektrischen Heizeinrichtung 18 elektrisch isoliert. Dadurch wird die elektrische Heizeinrichtung 18 bei einer Versorgung mit einem elektrischen Heizstrom über die beiden Hauptgurte 36, 38 jeweils ausgehend von seinen in den ersten Abschnitten 40 kontaktierten Randabschnitten von dem elektrischen Heizstrom durchflossen.

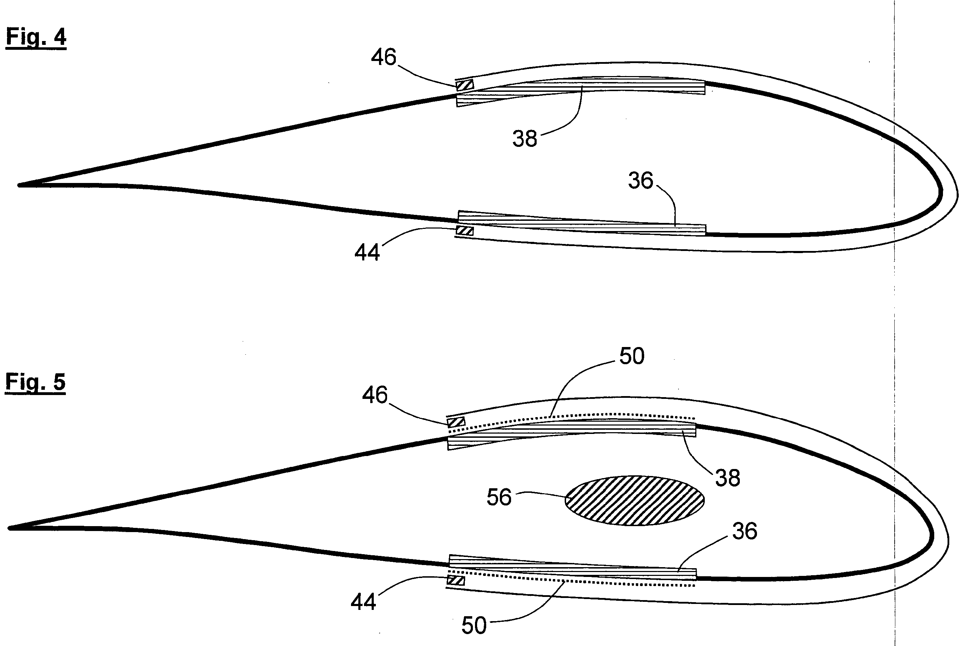

Im Ausführungsbeispiel der Figur 4 gibt es ebenfalls zwei elektrisch leitfähige Hauptgurte 36, 38. Diese sind mit metallischen Leitern 44, 46, deren Anordnung den metallischen Leitern des ersten Blitzschutzleiters 24 und des zweiten Blitzschutzleiters 30 aus der Figur 2 entspricht, kombiniert. Die Kombination aus dem druckseitigen Hauptgurt 36 und den metallischen Leiter 44 bildet einen ersten Blitzschutzleiter 24. Die Kombination aus dem saugseitigen Hauptgurt 38 und dem metallischen Leiter 46 bildet den zweiten Blitzschutzleiter 30. Insoweit gibt es auch in diesem Ausführungsbeispiel genau zwei Blitzschutzleiter 24, 30. Weitere elektrisch leitfähige Elemente, die in nicht zu vernachlässigender Weise zur Ableitung eines Blitzstroms beitragen, gibt es wie auch in den anderen Ausführungsbeispielen nicht.

Im Ausführungsbeispiel der Figur 5 ist im Wesentlichen eine der Figur 4 entsprechende Anordnung aus zwei elektrisch leitfähigen Hauptgurten 36, 38 und damit in Verbindung stehenden metallischen Leitern 44, 46 gegeben. Um eine großflächigere Kontaktierung der Hauptgurte 36, 38 zu erzielen, ist zwischen diesen Elementen jeweils ein metallisches Gitter 48, 50 angeordnet.

Es versteht sich, dass in den Ausführungsbeispielen 4 und 5 der elektrische Kontakt zwischen der Heizeinrichtung 18 und den aus den genannten Elementen kombinierten Blitzschutzleitern ausschließlich über die metallischen Leiter 44, 46 erfolgen kann. Die hierzu benachbart angeordneten Abschnitte der elektrischen Heizeinrichtung ober- bzw. unterhalb der Hauptgurte 36, 38 bzw. metallischen Gitter 48, 50 können durch eine elektrisch isolierende Materiallage hiervon getrennt sein.

In der Fig. 5 bilden die elektrisch leitfähigen Strukturen, d.h. im Beispiel die elektrische Heizeinrichtung 18, die metallischen Leiter 44, 46, die Hauptgurte 36, 38 und die metallischen Gitter 50, gemeinsam eine Art Faraday'schen Käfig aus, in dem selbst bei einem Blitzschlag nur geringe Potentialdifferenzen auftreten. Der sich bei idealisierter Betrachtung ergebende, spannungsfreie Raum 56 ist in der Figur eingezeichnet. Er eignet sich besonders zur Aufnahme weiterer elektrischer Leitungen, die beispielsweise zum Anschluss von im Rotorblatt untergebrachten Einheiten wie Sensoren oder Aktoren benötigt werden, weil in dem spannungsfreien Raum 56 angeordnete Leitungen bzw. die damit verbundenen Einheiten bei einem Blitzschlag nicht infolge elektromagnetischer Induktion beschädigt werden.

### Liste der verwendeten Bezugszeichen:

| | |
|---|---|
| 10 | Windenergieanlagenrotorblatt |
| 12 | Rotorblattspitze |
| 14 | Rotorblattwurzel |
| 16 | Blitzrezeptor |
| 18 | Elektrische Heizeinrichtung |
| 20 | Rotorblattspitzenseitiges Ende |
| 22 | Rotorblattwurzelseitiges Ende |
| 24 | Erster Blitzschutzleiter |
| 26 | Druckseite |
| 28 | Saugseite |
| 30 | Zweiter Blitzschutzleiter |
| 32 | Profilnasenkante |
| 34 | Profildickenrücklage |
| 36 | Druckseitiger Hauptgurt |
| 38 | Saugseitiger Hauptgurt |
| 40 | Erster Abschnitt |
| 42 | Zweiter Abschnitt |
| 44 | Metallischer Leiter |
| 46 | Metallischer Leiter |
| 48 | Metallisches Gitter |
| 50 | Metallisches Gitter |
| 52 | Weiterer Blitzrezeptor |
| 54 | Profilendkante |
| 56 | Spannungsfreier Raum |

## Patentansprüche

1. Windenergieanlagenrotorblatt (10) mit einer Rotorblattwurzel (14), einer Rotorblattspitze (12), einer elektrischen Heizeinrichtung (18), einem Blitzrezeptor (16) im Bereich der Rotorblattspitze (12) und mehreren, von dem Blitzrezeptor (16) zur Rotorblattwurzel (14) führenden Blitzschutzleitern (24, 30), **dadurch gekennzeichnet, dass**
• genau zwei der Blitzschutzleiter (24, 30) vorhanden sind,
• mindestens ein weiterer Blitzrezeptor (52) vorhanden ist, der in einem Abstand von der Rotorblattspitze (12) angeordnet und mit einem der Blitzschutzleiter (24, 30) verbunden ist, und
• jeder der beiden Blitzschutzleiter (24, 30) an einer Vielzahl von Punkten zwischen der Rotorblattwurzel (14) und der Rotorblattspitze (12) elektrisch leitend mit der elektrischen Heizeinrichtung (18) verbunden ist, so dass im Falle eines Blitzschlags ein Potentialausgleich zwischen den beiden Blitzschutzleitern (24, 30) über die elektrische Heizeinrichtung (18) erfolgt.

2. Windenergieanlagenrotorblatt (10) nach Anspruch 1, **dadurch gekennzeichnet, dass** jeder der Blitzschutzleiter (24, 30) entlang der gesamten Länge der elektrischen Heizeinrichtung (18) im elektrischen Kontakt mit der elektrischen Heizeinrichtung (18) steht.

3. Windenergieanlagenrotorblatt (10) nach Anspruch 1 oder 2, **dadurch gekennzeichnet, dass** die elektrische Heizeinrichtung (18) über die beiden Blitzschutzleiter (24, 30) mit einem Heizstrom versorgt werden kann.

4. Windenergieanlagenrotorblatt (10) nach einem der Ansprüche 1 bis 3, **dadurch gekennzeichnet, dass** die elektrische Heizeinrichtung (18) so ausgebildet ist, dass ein ihr über die beiden Blitzschutzleiter (24, 30) zugeführter Heizstrom quer zu einer Längsrichtung des Rotorblatts durch die elektrische Heizeinrichtung (18) fließt.

5. Windenergieanlagenrotorblatt (10) nach einem der Ansprüche 1 bis 4, **dadurch gekennzeichnet, dass** einer der Blitzschutzleiter (24, 30) einen über die gesamte Länge der elektrischen Heizeinrichtung (18) verlaufenden, metallischen Leiter (44, 46) aufweist.

6. Windenergieanlagenrotorblatt (10) nach einem der Ansprüche 1 bis 4, **dadurch gekennzeichnet, dass** das Rotorblatt einen elektrisch leitfähigen Hauptgurt (36, 38) aufweist, der sich über die gesamte Länge der elektrischen Heizeinrichtung (18) erstreckt und dass der Blitzschutzleiter (24, 30) oder ein Teil davon durch den elektrisch leitfähigen Hauptgurt gebildet wird.

7. Windenergieanlagenrotorblatt (10) nach Anspruch 6, **dadurch gekennzeichnet, dass** der Hauptgurt (36, 38) eine Außenseite aufweist, die einer aerodynamischen Oberfläche des Windenergieanlagenrotorblatts (10) zugewandt ist, wobei ein erster, streifenförmig in einer Längsrichtung des Rotorblatts erstreckter Abschnitt (40) der Außenseite im elektrischen Kontakt mit der elektrischen Heizeinrichtung (18) steht und ein zweiter Abschnitt der Außenseite (42) durch eine elektrisch isolierende Materiallage von der elektrischen Heizeinrichtung (18) getrennt ist.

8. Windenergieanlagenrotorblatt (10) nach Anspruch 6 oder 7, **dadurch gekennzeichnet, dass** der Blitzschutzleiter (24, 30) im Bereich der elektrischen Heizeinrichtung (18) von dem Hauptgurt (36, 38) und einem benachbart angeordneten, metallischen Leiter (44, 46) gebildet ist.

9. Windenergieanlagenrotorblatt (10) nach Anspruch 8, **dadurch gekennzeichnet, dass** zwischen dem Hauptgurt (36, 38) und dem benachbart angeordneten metallischen Leiter (44, 46) ein Metallgitter (48, 50) angeordnet ist.

10. Windenergieanlagenrotorblatt (10) nach einem der Ansprüche 1 bis 9, **dadurch gekennzeichnet, dass** die elektrische Heizeinrichtung (18) ein Kohlenstofffasermaterial aufweist.

11. Windenergieanlagenrotorblatt (10) nach einem der Ansprüche 1 bis 10, **dadurch gekennzeichnet, dass** eine Verbindung zwischen einem der Blitzschutzleiter (24, 30) und dem Blitzrezeptor (16) im Bereich der Rotorblattspitze (12) und/oder dem mindestens einen weiteren Blitzrezeptor (52) und/oder einem Erdungsanschluss im Bereich der Rotorblattwurzel (14) eine Funkenstrecke und/oder eine Vakuumschaltröhre aufweist.

12. Windenergieanlagenrotorblatt (10) nach einem der Ansprüche 1 bis 11, **dadurch gekennzeichnet, dass** einer der beiden Blitzschutzleiter (24, 30) an einer Druckseite (26) und der andere der beiden Blitzschutzleiter (24, 30) an einer Saugseite (28) des Rotorblatts angeordnet ist.

13. Windenergieanlagenrotorblatt (10) nach einem der Ansprüche 1 bis 12, **dadurch gekennzeichnet, dass** mindestens zwei weitere Blitzrezeptoren (52) vorhanden sind, von denen einer an einer Druckseite (26), der andere an einer Saugseite (28) des Rotorblatts angeordnet ist.

14. Windenergieanlagenrotorblatt (10) nach einem der Ansprüche 1 bis 13, **dadurch gekennzeichnet, dass** alle vorhandenen Blitzrezeptoren (16, 52) in einem Abstand von 20 % oder weniger der Länge des Rotorblatts von der Rotorblattspitze (12) entfernt angeordnet sind.

## Claims

1. A wind turbine rotor blade (10) having a rotor blade root (14), a rotor blade tip (12), an electrical heating device (18), a lightning receptor (16) in the region of the rotor blade tip (12) and a plurality of lightning conductors (24, 30) leading from the lightning receptor (16) to the rotor blade root (14), **characterized in that**
• at least but not more than two of the lightning conductors (24, 30) are provided,
• at least one further lightning receptor (52) is provided, which is arranged at a distance from the rotor blade tip (12) and is connected to one of the lightning conductors (24, 30), and
• each of the two lightning conductors (24, 30) is electrically conductively connected to the electrical heating device (18) at a multiplicity of points between the rotor blade root (14) and the rotor blade tip (12), so that, in the event of a lightning strike, equipotential bonding between the two lightning conductors (24, 30) takes place via the electrical heating device (18).

2. The wind turbine rotor blade (10) according to claim 1, **characterized in that** each of the lightning conductors (24, 30) is in electrical contact with the electrical heating device (18) along the entire length of the electrical heating device (18).

3. The wind turbine rotor blade (10) according to claim 1 or 2, **characterized in that** the electrical heating device (18) can be supplied with a heating current via the two lightning conductors (24, 30).

4. The wind turbine rotor blade (10) according to one of the claims 1 to 3, **characterized in that** the electrical heating device (18) is configured in such a manner that a heating current supplied to it via the two lightning conductors (24, 30) flows transversely to a longitudinal direction of the rotor blade through the electrical heating device (18).

5. The wind turbine rotor blade (10) according to one of the claims 1 to 4, **characterized in that** one of the lightning conductors (24, 30) has a metallic conductor (44, 46) which runs over the entire length of the electrical heating device (18).

6. The wind turbine rotor blade (10) according to one of the claims 1 to 4, **characterized in that** the rotor blade has an electrically conductive main spar cap (36, 38), which extends over the entire length of the electrical heating device (18), and that the lightning conductor (24, 30) or part thereof is formed by the electrically conductive main spar cap.

7. The wind turbine rotor blade (10) according to claim 6, **characterized in that** the main spar cap (36, 38) has an outer side which faces an aerodynamic surface of the wind turbine rotor blade (10), wherein a first section (40) of the outer side, which extends in the form of a strip in a longitudinal direction of the rotor blade, is in electrical contact with the electrical heating device (18), and a second section of the outer side (42) is separated from the electrical heating device (18) by an electrically insulating material layer.

8. The wind turbine rotor blade (10) according to claim 6 or 7, **characterized in that** the lightning conductor (24, 30) is formed in the region of the electrical heating device (18) by the main spar cap (36, 38) and an adjacently arranged metallic conductor (44, 46).

9. The wind turbine rotor blade (10) according to claim 8, **characterized in that** a metallic grid (48, 50) is arranged between the main spar cap (36, 38) and the adjacently arranged metallic conductor (44, 46).

10. The wind turbine rotor blade (10) according to one of the claims 1 to 9, **characterized in that** the electrical heating device (18) includes a carbon fiber material.

11. The wind turbine rotor blade (10) according to one of the claims 1 to 10, **characterized in that** a connection between one of the lightning conductors (24, 30) and the lightning receptor (16) in the region of the rotor blade tip (12) and/or the at least one further lightning receptor (52) and/or a grounding connection in the region of the rotor blade root (14) has a spark gap and/or a vacuum interrupter.

12. The wind turbine rotor blade (10) according to one of the claims 1 to 11, **characterized in that** one of the two lightning conductors (24, 30) is arranged on a pressure side (26) and the other of the two lightning conductors (24, 30) is arranged on a suction side (28) of the rotor blade.

13. The wind turbine rotor blade (10) according to one of the claims 1 to 12, **characterized in that** at least two further lightning receptors (52) are provided, of which one is arranged on a pressure side (26) and the other is arranged on a suction side (28) of the rotor blade.

14. The wind turbine rotor blade (10) according to one of the claims 1 to 13, **characterized in that** all of the lightning receptors (16, 52) provided are arranged at a distance of 20% or less of the length of the rotor blade away from the rotor blade tip (12).

## Revendications

1. Pale de rotor d'éolienne (10) avec un pied de pale (14), une pointe de pale (12), un dispositif de chauffage électrique (18), un récepteur contre la foudre (16) dans la zone de la pointe de pale (12) et plusieurs paratonnerres (24, 30), du récepteur contre la foudre (16) jusqu'au pied de pale (14), **caractérisée en ce que** :
• il existe exactement deux des paratonnerres (24, 30),
• il existe au moins un autre récepteur contre la foudre (16) qui est placé à une distance de la pointe de pale (12) et est relié à un des paratonnerres (24, 30), et
• chacun des deux paratonnerres (24, 30) est relié électriquement, avec le dispositif de chauffage électrique (18), à une multitude de points entre le pied de pale (14) et la pointe de pale (12), si bien qu'en cas de foudre une liaison équipotentielle entre les deux paratonnerres (24, 30) est produite grâce au dispositif de chauffage électrique (18).

2. Pale de rotor d'éolienne (10) selon la revendication 1 **caractérisée en ce que** chacun des paratonnerres (24, 30) se trouve en contact électrique avec le dispositif de chauffage électrique (18) sur toute la longueur du dispositif de chauffage électrique (18).

3. Pale de rotor d'éolienne (10) selon la revendication 1 ou 2 **caractérisée en ce que** le dispositif de chauffage électrique (18) peut être alimenté par un courant de chauffage grâce aux deux paratonnerres (24, 30).

4. Pale de rotor d'éolienne (10) selon la revendication 1 ou 3 **caractérisée en ce que** le dispositif de chauffage électrique (18) est développé de telle sorte qu'un courant de chauffage alimenté par les deux paratonnerres (24, 30) va vers elle de manière transversale au sens longitudinal d'une pale de rotor grâce au dispositif de chauffage électrique (18).

5. Pale de rotor d'éolienne (10) selon une des revendications de 1 à 4 **caractérisée en ce qu'**un des deux paratonnerres (24, 30) comporte un conducteur métallique (44, 46) passant sur toute la longueur du dispositif de chauffage électrique (18).

6. Pale de rotor d'éolienne (10) selon une des revendications de 1 à 4 **caractérisée en ce que** la pale de rotor comporte une membrure conductrice d'électricité principale (36, 38) qui s'étend sur toute la longueur du dispositif de chauffage électrique (18) et **en ce que** le paratonnerre (24, 30) ou une partie de celui-ci est constitué par la membrure conductrice d'électricité principale.

7. Pale de rotor d'éolienne (10) selon la revendication 6 **caractérisée en ce que** la membrure principale (36, 38) comporte une face extérieure qui est orientée vers une surface aérodynamique de la pale de rotor d'éolienne (10) alors qu'une première partie étendue en forme de bande sur la longueur de la face extérieure se trouve en contact électrique avec le dispositif de chauffage électrique (18) et une deuxième partie de la face extérieure (42) est séparée du dispositif de chauffage électrique (18) par une couche de matériau isolant électrique.

8. Pale de rotor d'éolienne (10) selon la revendication 6 ou 7 **caractérisée en ce que** le paratonnerre (24, 30), dans la zone du dispositif de chauffage électrique (18), est constitué d'une membrure principale (36, 38) et d'un conducteur métallique avoisinant (44, 46).

9. Pale de rotor d'éolienne (10) selon la revendication 8 **caractérisée en ce qu'**un grillage métallique est placé entre la membrure principale (36, 38) et le conducteur métallique avoisinant (44, 46).

10. Pale de rotor d'éolienne (10) selon une des revendications de 1 à 9 **caractérisée en ce que** le dispositif de chauffage électrique (18) comporte de la fibre de carbone.

11. Pale de rotor d'éolienne (10) selon une des revendications de 1 à 10 **caractérisée en ce qu'**une connexion entre un des paratonnerres (24, 30) et le récepteur contre la foudre (16) dans la zone de la pointe de pale (12) et / ou au moins un autre récepteur contre la foudre (52) et / ou une prise de terre dans la zone du pied de pale comporte un éclateur et / ou un tube commutateur à vide.

12. Pale de rotor d'éolienne (10) selon une des revendications de 1 à 11 **caractérisée en ce qu'**un des deux paratonnerres (24, 30) est disposé sur un côté « pression » (26) et l'autre des deux paratonnerres (24, 30) est disposé sur un côté « traction » (28) de la pale de rotor.

13. Pale de rotor d'éolienne (10) selon une des revendications de 1 à 12 **caractérisée en ce qu'**il existe au moins deux autres récepteurs contre la foudre (52) dont l'un est disposé sur un côté « pression » (26) et l'autre sur un côté « traction » (28) de la pale de rotor.

14. Pale de rotor d'éolienne (10) selon une des revendications de 1 à 13 **caractérisée en ce que** tous les récepteurs contre la foudre (16, 52) existants sont placés à une distance de 20 % ou moins de la longueur de la pale de rotor par rapport à la pointe de pale (12).
